(19) Europäisches Patentamt
European Patent Office
Office européen des brevets

(11) **EP 4 317 347 A1**

(12) **EUROPEAN PATENT APPLICATION**
published in accordance with Art. 153(4) EPC

(43) Date of publication:
**07.02.2024 Bulletin 2024/06**

(21) Application number: **21934977.6**

(22) Date of filing: **31.03.2021**

(51) International Patent Classification (IPC):
*C09J 133/06* (2006.01)   *C09J 7/38* (2018.01)
*C09J 11/06* (2006.01)

(52) Cooperative Patent Classification (CPC):
**C09J 7/38; C09J 11/06; C09J 133/06**

(86) International application number:
**PCT/JP2021/014053**

(87) International publication number:
**WO 2022/208815 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Teraoka Seisakusho Co., Ltd.**
**Tokyo 140-8711 (JP)**

(72) Inventors:
• **TSUCHIYA, Yasushi**
  **Tokyo 140-8711 (JP)**
• **OKAMURA, Shoko**
  **Tokyo 140-8711 (JP)**

(74) Representative: **J A Kemp LLP**
**80 Turnmill Street**
**London EC1M 5QU (GB)**

(54) **PRESSURE-SENSITIVE ADHESIVE COMPOSITION AND PRESSURE-SENSITIVE ADHESIVE TAPE**

(57) By an pressure-sensitive adhesive composition including an acrylic copolymer (A), and a crosslinking agent (B), in which, in a case where a theoretical glass transition temperature (theoretical Tg, unit K) of the acrylic copolymer (A) is defined as a, a weight average molecular weight ($\times 10^4$) is defined as b, and the amount of a monomer ($A_{HTg}$) having a glass transition temperature (Tg') of 273 K or higher and 437 K or lower included in a monomer component of the acrylic copolymer (A) (a percentage with respect to a mass of all monomer components, unit %) is defined as c, a pressure-sensitive adhesiveness index represented by an inverse of the cube root of the product of a · b · c is $1.5 \times 10^{-2}$ or more and $2.0 \times 10^{-2}$ or less, an acrylic pressure-sensitive adhesive composition and a pressure-sensitive adhesive tape having excellent adhesiveness or a high-temperature holding property, load resistance, and impact resistance even to a hardly adhesive resin represented by polyoxymethylene; polyacetal (POM) can be provided.

*FIG. 1*

**Description**

[Technical Field]

The present invention relates to an acrylic pressure-sensitive adhesive composition or a pressure-sensitive adhesive tape having adhesiveness or a high-temperature holding property, load resistance, and impact resistance which has been developed for fixing of a portable electronic device such as a smartphone or a tablet terminal, a sensor of a vehicle, or a drive recorder, the pressure-sensitive adhesive composition or the pressure-sensitive adhesive tape having improved adhesiveness due to characteristics including tackiness, and excellent stickiness to a resin material used with the practical use of 5G, particularly a hardly adhesive resin material represented by polyoxymethylene; polyacetal (POM).

[Background Art]

In recent years, the practical use of 5G, which is the next-generation mobile communication system following 4G, has been rapidly advanced.
5G stands for "5th Generation (fifth generation mobile communication system)". 5G enables high-speed and large-capacity communication, communication with high reliability and low latency, and simultaneous connection to a large number of devices, by communication using a high frequency band of 20 GHz or higher which has not been used in the related art and a super-multi-element antenna called "Multiple-Input and Multiple-Output (MIMO)".
However, in 5G, since a frequency of a radio wave used is high, a transmission loss due to an antenna, wiring, or the like tends to be larger than in 4G. Since the transmission loss leads to a decrease in performance of a terminal, the use in members configuring 5G such as materials having a property of having a transmission loss smaller than that of products of the related art, for example, a fluororesin, a liquid crystal polymer, and a low-dielectric polyimide is being promoted.
In fact, the development of a resin film or the like for a substrate using such a material is in progress, and in some cases, the resin film is employed as a member of a 5G terminal.
In addition, as the frequency increases, straightness of a radio wave becomes stronger, the radio wave that can be received becomes weaker indoors, behind a building, or the like, and there may be places where it is difficult for the terminal to connect to a network or the like.
Therefore, the required performance of the material is also changing. For example, attempts are being made to increase a proportion of metal used for a terminal body with a resin or glass through which the radio waves easily pass.
In the related art, in a pressure-sensitive adhesive or a pressure-sensitive adhesive tape which has been developed for fixing of a portable electronic device such as a smartphone or a tablet terminal, and a sensor or a drive recorder of a vehicle, adhesiveness or a high-temperature holding property, load resistance, impact resistance, and waterproofness have been required.
However, while the pressure-sensitive adhesive tape specialized for such characteristics have a weak tackiness of a surface of a pressure-sensitive adhesive layer and excellent adhesiveness to metal, the stickiness to the resin material, particularly the hardly adhesive resin material represented by POM is poor, and thus, the characteristics to the resin material suitable for 5G described above may not be able to be exhibited.
A pressure-sensitive adhesive composition having various compositions has been studied for use of a pressure-sensitive adhesive tape applied to a hardly adhesive adherend.
In view of the recent progress in which a material used in a vehicle or the like is being changed from a metal-based material to a plastic-based material, Patent Document 1 provides a pressure-sensitive adhesive composition capable of forming a pressure-sensitive adhesive layer having a high stress relaxation property in a high temperature environment and high adhesiveness to a low-polarity adherend, while maintaining tackiness or a cohesive force necessary for pressure-sensitive adhesiveness. The pressure-sensitive adhesive composition includes a (meth)acrylic copolymer (A) having an acid value of 7.8 to 45, a rosin-based pressure-sensitive adhesiveness imparting resin (B) having a softening point of 100°C or higher, and a crosslinking agent (C). The (meth)acrylic copolymer (A) is a copolymer of monomer components including alkyl (meth)acrylate ester having less than 8 carbon atoms of an alkyl group, alkyl (meth)acrylate ester having 8 or more carbon atoms of an alkyl group, and an acidic group-containing monomer. The pressure-sensitive adhesive composition includes more than 16 parts by mass and less than 30 parts by mass of the rosin-based pressure-sensitive adhesiveness imparting resin (B) and 0.01 to 5 parts by mass of the crosslinking agent (C) with respect to 100 parts by mass of the (meth)acrylic copolymer (A).
Patent Document 1 discloses a polyolefin resin such as polypropylene or polyethylene as a material for forming a low-polarity adherend which is evaluated for adhesiveness.
In recent years, in view of a situation in which a material which is hardly adhered with a pressure-sensitive adhesive of the related art, such as an oil-repellent or water-repellent coated surface or the like, is being used in an electronic device to improve an antifouling property and emphasize a design, Patent Document 2 provides an acrylic pressure-sensitive adhesive having excellent tight adhesiveness to a hardly adhesive adherend, and impact resistance, and a pressure-sensitive adhesive sheet for an electronic device using the same. This acrylic pressure-sensitive adhesive includes 100 parts by weight of an acrylic copolymer having a molecular weight distribution (Mw/Mn) of 8 to 23, and 15 to 25 parts by weight of a pressure-sensitive adhesiveness imparting resin having a softening point of 140°C or lower.

In Patent Document 2, the term "hardly adhesive adherend" is defined as an adherend, a material of which is a non-polar resin, or an adherend, a surface of which is subjected to a non-polar surface treatment, and a material subjected to fluorine coating or the like for oil repellency or water repellency, or polyethylene, polypropylene, and the like are specific examples.

Patent Document 3 provides a pressure-sensitive adhesive composition for a hardly adhesive adherend having a high holding power, which adheres firmly to a hardly adhesive adherend. This pressure-sensitive adhesive composition includes an acrylic resin (A) obtained by copolymerizing a copolymer component (a) including a carboxy group-containing monomer (a1) and (meth)acrylic acid (a2) in a terminal represented by General Formula (1).

$$[\text{Formula}] \quad CH_2=CR^1\text{-CO-O-}(R_2\text{-COO-})nH \ldots \quad (1)$$

(Here, $R^1$ represents hydrogen or a methyl group, $R^2$ represents saturated aliphatic, unsaturated aliphatic, aromatic, saturated alicyclic, or divalent unsaturated alicyclic hydrocarbon, and n represents a positive number of 1 or more.)

In Patent Document 3, as a material for forming a hardly adhesive adherend, ethylene propylene diene rubber (EPDM), butyl rubber (IIR), chloroprene rubber (CR), styrene butadiene rubber (SBR), thermoplastic polyolefin rubber, modified asphalt, and the like are exemplary examples.

However, the hardly adhesive adherend of Citation List 3 does not include polyacetal (POM) which is one of engineering plastics having excellent heat resistance and excellent mechanical characteristics, and which is also used for a rotating component such as a gear or a bearing, or parts requiring durability such as a grip, a hook, or a cover, and instruments.

Considering that an adhesive having sufficient pressure-sensitive adhesive strength and capable of reconstruction by reattachment is required for a pressure-sensitive adhesive used in a case of sticking a decorative sheet such as wallpaper to a wall material or a panel, and so-called tackiness is required, Patent Document 4 provides a pressure-sensitive adhesive composition having high pressure-sensitive adhesive strength, a re-construction property with tackiness, which does not impair dimensional stability after a sticking step. This pressure-sensitive adhesive composition includes an acrylic resin copolymer in which n-butyl acrylate, a carboxyl group-containing monomer, and a hydroxy group-containing monomer are polymerized. The proportion of n-butyl acrylate occupying 100 parts by mass of the acrylic resin copolymer is 20 parts by mass or more, and the proportion of the hydroxy group-containing monomer is 0.05 to 5.0 parts by mass. An acid value of this acrylic resin copolymer is 40 to 80 mgKOH/g, a mass average molecular weight is 200,000 to 500,000, and a dispersity (Mw/Mn) is 2.0 or less.

In Patent Document 4, for a material of a wall material, a panel, and a decorative sheet, to which the pressure-sensitive adhesive composition is applied, aluminum, stainless steel, a plaster board, a zinc-plated steel sheet, a resin-coated steel sheet, and the like are exemplary examples of the material of the wall material or the panel, and vinyl chloride, polyethylene terephthalate, olefin, and the like are exemplary examples of the material of the decorative sheet.

In order to fix a housing-LCD-top panel of a display screen of a portable electronic device such as a smartphone or a tablet terminal, which are becoming larger and has the housing becoming thinner, Patent Document 5 provides a pressure-sensitive adhesive composition having excellent repulsion resistance, load resistance, narrow frame wet heat load resistance, processability, impact resistance, and waterproofness, which can withstand a repulsive force of a FPC from an inner portion and also withstand a force from an outer portion such as impact resistance or waterproofness, and a pressure-sensitive adhesive tape using the same.

The pressure-sensitive adhesive composition disclosed in Patent Document 5 includes an acrylic copolymer (A), a crosslinking agent (B), a silane coupling agent (C), and an antioxidant (D). The acrylic copolymer (A) includes 10% to 20% by mass of alkyl (meth)acrylate ester (A1) including an alkyl group having 1 to 3 carbon atoms, 50% to 80% by mass of alkyl (meth)acrylate ester (A2) including an alkyl group having 4 to 12 carbon atoms, 10% to 15% by mass of a carboxyl group-containing monomer (A3), 0.01 to 0.5% by mass of a hydroxyl group-containing monomer (A4), and 1% to 5% by mass of vinyl acetate (A5) as constituent components of a polymer chain. The acrylic copolymer (A) is obtained by polymerization using a peroxide-based polymerization initiator, and has a weight average molecular weight of 950,000 to 2,000,000 and a theoretical Tg of -55°C or lower.

[Citation List]

[Patent Documents]

[Patent Document 1]
Japanese Unexamined Patent Application, First Publication No. 2018-177902
[Patent Document 2]
Japanese Unexamined Patent Application, First Publication No. 2019-214739
[Patent Document 3]
Japanese Unexamined Patent Application, First Publication No. 2019-151837
[Patent Document 4]
Japanese Unexamined Patent Application, First Publication No. 2020-158590
[Patent Document 5]
Japanese Patent No. 6307175

[Summary of Invention]

[Technical Problem]

Patent Documents 1 to 5 include no description or suggest regarding an examination of adhesiveness of a pressure-sensitive adhesive to an adherend formed of hardly adhesive engineering plastics such as POM.
In addition, Patent Document 4 does not mention a holding power of the pressure-sensitive adhesive to a low-polarity adherend.
Furthermore, Patent Document 5 does not examine tackiness of the pressure-sensitive adhesive.
Thus, an object of the present invention is to provide an acrylic pressure-sensitive adhesive composition and a pressure-sensitive adhesive tape having excellent adhesiveness or a high-temperature holding property, a load resistance, and impact resistance even to a hardly adhesive resin represented by POM, by improving adhesiveness based on characteristics including tackiness of a surface of a pressure-sensitive adhesive layer to a pressure-sensitive adhesive tape of the related art.
Another object of the present invention is to provide an acrylic pressure-sensitive adhesive composition or a pressure-sensitive adhesive tape having excellent adhesiveness or a high-temperature holding property, load resistance, and impact resistance which has been developed for fixing of a portable electronic device such as a smartphone or a tablet terminal, and a sensor or a drive recorder of a vehicle, the pressure-sensitive adhesive composition or the pressure-sensitive adhesive tape having improved adhesiveness due to characteristics including tackiness, and excellent stickiness to a resin material used with the practical use of 5G, particularly a hardly adhesive resin represented by POM.

[Solution to Problem]

As a result of intensive studies to achieve the above objects, the present inventors have obtained new findings that, by using an acrylic copolymer selected in consideration of adhesiveness based on characteristics including tackiness as a resin component of a pressure-sensitive adhesive composition, it is possible to provide an acrylic pressure-sensitive adhesive composition capable of obtaining excellent adhesiveness even to a hardly adhesive adherend formed of a low-polarity resin such as POM and having excellent high-temperature holding property, load resistance, and impact resistance, and a pressure-sensitive adhesive tape using the same. The present inventors have completed the present invention based on such new findings.
The present invention includes the following aspects.

[1] A pressure-sensitive adhesive composition including: an acrylic copolymer (A); and a crosslinking agent (B),

in which the weight average molecular weight of the acrylic copolymer (A) is 650,000 or more and 1,200,000 or less, and the amount of a monomer ($A_{HTg}$) having Tg' (the glass transition temperature in a case where the monomer is homopolymerized) of 273 K or higher and 437 K or lower in all monomer components of the acrylic copolymer (A) is 11.5% by mass or more, and
in a case where a theoretical glass transition temperature (theoretical Tg) of the acrylic copolymer (A) is defined as a, a weight average molecular weight ($\times 10^4$) is defined as b, and the amount of the monomer ($A_{HTg}$) in all monomer components is defined as c, a pressure-sensitive adhesiveness index represented by Expression (1):

$$\frac{1}{\sqrt[3]{a \times b \times c}} \cdots (1)$$

is $1.5 \times 10^{-2}$ or more and $2.0 \times 10^{-2}$ or less.

[2] The pressure-sensitive adhesive composition according to [1], in which the theoretical Tg of the acrylic copolymer (A) is 223 K or lower.
[3] The pressure-sensitive adhesive composition according to [1], in which the acrylic copolymer (A) is an acrylic copolymer including a carboxyl group and a hydroxyl group.
[4] The pressure-sensitive adhesive composition according to any one of [1] to [3], in which a monomer component of the acrylic copolymer (A) includes alkyl (meth)acrylate ester (A1) including an alkyl group having 4 or more and 12 or less carbon atoms, alkyl (meth)acrylate ester (A2) including an alkyl group having 1 or more and 3 or less carbon atoms, a carboxyl group-containing monomer (A3), and a hydroxyl group-containing monomer (A4).
[5] The pressure-sensitive adhesive composition according to any one of [1] to [4], in which the monomer component of the acrylic copolymer (A) includes 50% by mass or more and 90% by mass or less of the alkyl (meth)acrylate ester (A1) including an alkyl group having 4 or more and 12 or less carbon atoms, 3% by mass or more and 10% by mass or less of the alkyl (meth)acrylate ester (A2) including an alkyl group having 1 or more and 3 or less carbon atoms, 1% by mass or more and 10% by mass or less of the carboxyl group-containing monomer (A3), and 0.1% by mass or more and 0.5 % by mass or less of the hydroxyl group-containing monomer (A4) in 100% by mass of all monomer components.
[6] The pressure-sensitive adhesive composition according to any one of [1] to [5], in which the total amount of the carboxyl group-containing monomer (A3) and the hydroxyl group-containing monomer (A4) is 10.5% by mass or less.
[7] The pressure-sensitive adhesive composition according to any one of [1] to [6], in which the monomer component of the acrylic copolymer includes a vinyl compound monomer (A5) other than the monomer components (A1) to (A4).
[8] The pressure-sensitive adhesive composition according to any one of [1] to [7], in which the monomer component of the acrylic copolymer includes 10% by mass or less of a vinyl compound monomer (A5) other than the monomer components (A1) to (A4).
[9] A pressure-sensitive adhesive tape including a pressure-sensitive adhesive layer formed of the pressure-sensitive adhesive composition according to any one of [1] to [8].
[10] The pressure-sensitive adhesive tape according to [9], including a sheet-shaped base material, and the pressure-sensitive adhesive layer provided on at least one surface of the sheet-shaped base material.

[Advantageous Effects of Invention]

According to the present invention, it is possible to provide an acrylic pressure-sensitive adhesive composition or a pressure-sensitive adhesive tape having excellent adhesiveness or a high-temperature holding property, load resistance, and impact resistance which has been developed for fixing of a portable electronic device such as a smartphone or a tablet terminal, and a sensor or a drive recorder of a vehicle, the pressure-sensitive adhesive composition or the pressure-sensitive adhesive tape having improved adhesiveness due to characteristics including tackiness, and excellent stickiness to a resin material used with the practical use of 5G, particularly a hardly adhesive resin represented by POM.

[Brief Description of Drawings]

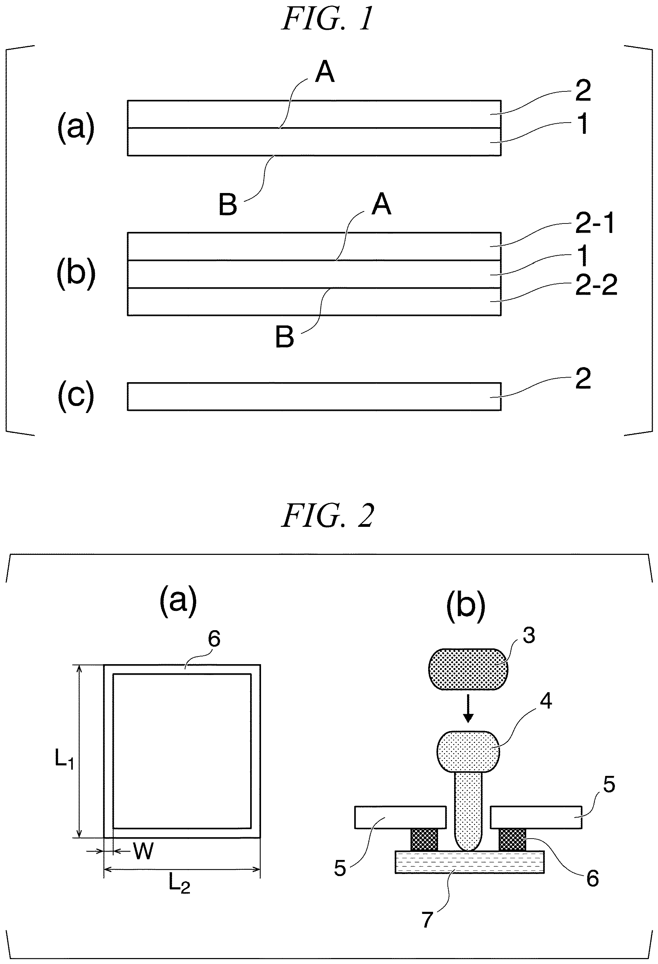

(A) to (C) of FIG. 1 are diagrams schematically showing a layer configuration of an aspect of a configuration of a pressure-sensitive adhesive tape according to the present invention.
(a) of FIG. 2 is a diagram schematically showing a planar shape of a test sample used for evaluating of impact resistance, and (b) of FIG. 2 is a diagram schematically showing a configuration of a test device used for evaluation of impact resistance.

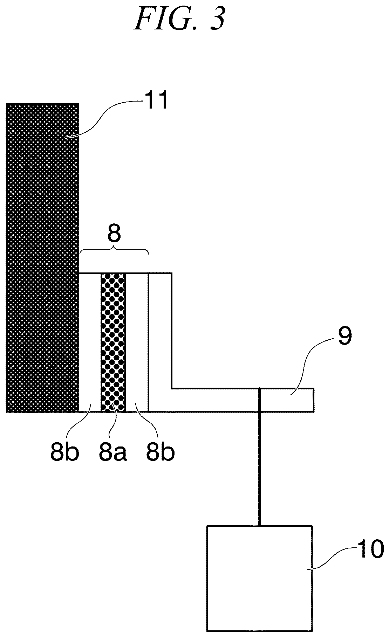

FIG. 3 is a schematic diagram showing a method for evaluating load resistance.

[Description of Embodiments]

<Pressure-sensitive adhesive composition>

A pressure-sensitive adhesive composition of the present invention includes an acrylic copolymer (A) and a crosslinking agent (B). A pressure-sensitive adhesive layer of a pressure-sensitive adhesive tape can be formed in a state where the acrylic copolymer (A) is cured with the crosslinking agent (B).

(Acrylic copolymer)

As the acrylic copolymer (A), an acrylic copolymer having a pressure-sensitive adhesiveness index defined by Expression (1), which is $1.5 \times 10^{-2}$ or more and $2.0 \times 10^{-2}$ or less, is used.

$$\frac{1}{\sqrt[3]{a \times b \times c}} \cdots (1)$$

a: Theoretical glass transition temperature (theoretical Tg) of the acrylic copolymer (A) (unit: K)
b: Weight average molecular weight (Mw/Mn) of the acrylic copolymer (A) ($\times 10^4$)
c: Amount of the monomer ($A_{HTG}$) having a glass transition temperature (Tg'), in a case where the monomer is homopolymerized, of 273 K or higher and 437 K or lower included in all monomer components of the acrylic copolymer (A) (a percentage with respect to a mass of all monomer components, unit: %)

As important characteristics which affect the adhesiveness of the pressure-sensitive adhesive, a high-temperature holding property, load resistance, impact resistance, a pressure-sensitive adhesive strength, tackiness, and the like are exemplary examples. There are various factors to exhibit such characteristics of the pressure-sensitive adhesive, and particularly, it was found in a development process that three factors of the "theoretical Tg" of the acrylic copolymer, the "weight average molecular weight" of a synthesized acrylic copolymer, and a "proportion of a high Tg' monomer" in a monomer composition constituting the acrylic copolymer greatly affect the exhibiting of the important characteristics of the pressure-sensitive adhesive such as the pressure-sensitive adhesive strength. Mainly, the "theoretical Tg" affects ease of adapting or ease of sticking to an adherend affected by tackiness, the "weight average molecular weight" affects the high-temperature holding property, and the "proportion of a high Tg' monomer" affects the pressure-sensitive adhesive strength. These factors do not necessarily have to be large or small, and there are appropriate values depending on the adherend to which the desired adhesiveness is desired to be exhibited.
However, each factor is complicatedly intertwined and finally exhibited as the adhesiveness, and it is not easy to consider each factor independently.
Therefore, in the present invention, the concept of the "pressure-sensitive adhesiveness index" was introduced as an index capable of easily and effectively comprehensively evaluating the adhesiveness exhibited by these three factors.
As shown in Expression (1), the "pressure-sensitive adhesiveness index" represents an inverse of the cube root of the product of the above three factors. In a case where this value is low, the characteristics such as a high holding power, high pressure-sensitive adhesive strength, and low tackiness tend to be exhibited, and when this value is high, the characteristics such as a low holding power, low pressure-sensitive adhesive strength, and high tackiness tend to be exhibited.
By setting the pressure-sensitive adhesiveness index in the specific range described above, it is possible to provide a pressure-sensitive adhesive composition and a pressure-sensitive adhesive tape having the characteristics described above in a well-balanced manner, exhibiting excellent adhesiveness, and capable of being suitably applied even to a hardly adhesive adherend formed of POM or the like.
The theoretical Tg of the acrylic copolymer (A) can be obtained by a measurement method using the FOX equation as disclosed in Patent Document 3.
The theoretical Tg of the acrylic copolymer (A) is preferably 223 K (-50°C) or lower, and more preferably 213 K or higher and 203 K or lower (-60°C to -70°C).
From viewpoints of having the adhesiveness or the high-temperature holding property, the load resistance, and the impact resistance in a well-balanced manner and obtaining excellent stickiness to the hardly adhesive resin represented by POM, the weight average molecular weight of the acrylic copolymer (A) is preferably 650,000 or more and 1,200,000 or less and more preferably 700,000 or more and 1,100,000 or less.

This weight average molecular weight can be measured by a measurement method using a GPC method.

(Monomer component)

The acrylic copolymer (A) is formed by copolymerization mainly using a (meth)acrylic group of a monomer component consisting of a plurality of different monomers.

The acrylic copolymer (A) is preferably an acrylic copolymer including a carboxyl group and a hydroxyl group.

A monomer component as a constituent component of a polymer chain of the acrylic copolymer including a carboxyl group and a hydroxyl group preferably includes the following monomers.

· Alkyl (meth)acrylate ester (A1) including an alkyl group having 4 or more and 12 or less carbon atoms (hereinafter, also referred to as a "component (A1)")
· Alkyl (meth)acrylate ester (A2) including an alkyl group having 1 or more and 3 or less carbon atoms (hereinafter, also referred to as a "component (A2)")
· A carboxyl group-containing monomer (A3) (hereinafter, also referred to as a "component (A3)")
· A hydroxyl group-containing monomer (A4) (hereinafter, also referred to as a "component (A4)")

The monomer component of the acrylic copolymer may further include

· a vinyl compound (A5) other than the component (A1) to the component (A4) (hereinafter, also referred to as a "component (A5)")

Hereinafter, each monomer component will be described. In the description hereinafter, "(meth)acryl" is a general term for acryl and methacryl.

The component (A1) is alkyl (meth)acrylate ester including an alkyl group having 4 or more and 12 or less carbon atoms.

Methyl (meth)acrylate, ethyl (meth)acrylate, propyl (meth)acrylate, butyl (meth)acrylate, isobutyl (meth)acrylate, 2-ethylhexyl (meth)acrylate, octyl (meth)acrylate, isooctyl (meth)acrylate, isononyl (meth)acrylate, lauryl (meth)acrylate, and the like are specific examples. Two or more kinds of these may be used in combination.

Among these, 2-ethylhexyl (meth)acrylate and isooctyl (meth)acrylate are preferable.

The component (A2) is alkyl (meth)acrylate ester including an alkyl group having 1 or more and 3 or less carbon atoms.

Methyl (meth)acrylate, ethyl (meth)acrylate, propyl (meth)acrylate, and the like are specific examples. Two or more kinds of these may be used in combination.

Among these, methyl (meth)acrylate and ethyl (meth)acrylate are preferable.

The component (A3) is a component which mainly contributes to the improvement of the high-temperature holding property or the load resistance by applying a suitable proportion of a carboxyl group to the acrylic copolymer (A).

Acrylic acid, methacrylic acid, itaconic acid, crotonic acid, maleic acid, fumaric acid, 2-carboxy-1-butene, 2-carboxy-1-pentene, 2-carboxy-1-hexene, and 2-carboxy-1-heptene are specific examples. Two or more kinds of these may be used in combination.

Among these, acrylic acid and methacrylic acid are preferable.

The component (A4) is a component which mainly contributes to the improvement of the stickiness or the holding property by applying a suitable proportion of a hydroxyl group to the acrylic copolymer (A).

2-hydroxyethyl (meth)acrylate, 3-hydroxypropyl (meth)acrylate, and 4-hydroxybutyl (meth)acrylate are specific examples. Two or more kinds of these may be used in combination.

Among these, 2-hydroxyethyl (meth)acrylate and 4-hydroxybutyl (meth)acrylate are preferable.

In 100% by mass of constituent components (monomer unit), that is, all monomer components of the acrylic copolymer (A), the amount of the component (A1) is preferably 50% by mass or more and 90% by mass or less and more preferably 70% by mass or more and 90% by mass or less, the amount of the component (A2) is preferably 3% by mass or more and 10% by mass or less and more preferably 3% by mass or more and 7% by mass or less, the amount of the component (A3) is preferably 1 % by mass or more and 10% by mass or less and more preferably 5% by mass or more and 8% by mass or less, and the amount of the component (A4) is preferably 0.1% by mass or more and 0.5% by mass or less and more preferably 0.1% by mass or more and 0.2% by mass or less.

In addition, the total amount of the component (A3) and the component (A4) is preferably 10.5% by mass or less in all monomer components.

In addition, the monomer component of the acrylic copolymer (A) may further include a monomer (A5) (hereinafter, also referred to as a "component (A5)") other than the components (A1) to (A4) within a range not impaired the effects of the present invention.

As the component (A5), a vinyl compound, other than the components (A1) to (A4), which is exemplified as the monomer $(A_{HTg})$ having Tg' in a specific range which will be described later, and other copolymerizable monomers used in combination, if necessary, are exemplary examples.

The proportion of the component (A5) in all monomer components is preferably 0% by mass or more and 10% by mass or less.

The monomer component of the acrylic copolymer (A) includes the monomer $(A_{HTg})$ having Tg' in a specific range of 273 K or higher and 437 or lower.

The monomer $(A_{HTg})$ can be included in the monomer component as at least one component of the components (A1) to (A5) described above.

In a case where the monomer $(A_{HTg})$ is included in the monomer component of the acrylic copolymer (A) as at least one component of the components (A1) to (A4), a amount (%) of the monomer $(A_{HTg})$ in the components (A1) to (A4) is used as "c" in Expression (1). In a case where a plurality of monomers $(A_{HTg})$ are used, the sum of the amounts thereof is used as "c".

In a case where the monomer $(A_{HTg})$ is included in the monomer component of the acrylic copolymer (A) as at least the component (A5) in the components (A1) to (A5), the amount (%) of the monomer $(A_{HTg})$ in the components (A1) to (A5) is used as "c" in Expression (1). In a case where a plurality of monomers $(A_{HTg})$ are used, a sum of the amounts thereof is used as "c".

The amount of the monomer $(A_{HTg})$ included in all monomer components of the acrylic copolymer (A) is preferably 11.5% by mass or more and more preferably 11.5% by mass or more and 50% by mass or less.

As the monomer $(A_{HTg})$ having Tg' of 273 K or higher and 437 K or lower, a monomer including a (co)polymerizable vinyl group copolymerizable with other monomers can be an exemplary example.

As the monomer including a polymerizable vinyl group having Tg' in the specific range described above, a vinyl compound including a (meth)acryloyloxy group and having Tg' in the specific range described above, a vinyl compound including a (meth)acrylamide group and having Tg' in the specific range described above, acrylonitrile (Tg': 378 K), vinyl acetate (Tg': 305 K), and the like are exemplary examples, and among these, at least one kind can be selected and used.

As the vinyl compound including a (meth)acryloyloxy group, (meth)acrylic acid and alkyl (meth)acrylate ester represented by Formula (2) and having Tg' in the specific range described above, alkyl (meth)acrylate ester represented by Formula (3) and having Tg' in the specific range described above are exemplary examples.

$$CH\text{-}CR^1\text{-}CO\text{-}O\text{-}R^2 \cdot \cdot \cdot \qquad (2)$$

(In the formula, $R^1$ represents a hydrogen atom or a methyl group, and $R^2$ represents a hydrogen atom or an optionally substituted alkyl group.)

As an alkyl group as $R^2$, an alkyl group having 1 or more and 20 or less carbon atoms can be an exemplary example. The alkyl group may be linear, branched, or cyclic. As the linear or branched alkyl group, alkyl groups having 1 or more and 4 or less carbon atoms such as a methyl group, an ethyl group, an n-butyl group, an iso-butyl group, a tert-butyl group, and the like are exemplary examples. As the cyclic alkyl group, alkyl groups having 6 or more and 10 or less carbon atoms such as a cyclohexyl group, an isobornyl group, and the like are exemplary examples.

One or more hydrogen atoms of this alkyl group may be substituted with another group. As the substituent of the alkyl group, an aryloxy group such as a hydroxyl group, a phenyloxy group, or the like, an aryl group such as a phenyl group or the like, an aliphatic heterocyclic compound residue such as an epoxy group, a tetrahydrofuryl group, or the like, an amino group ($-R^3R^4$: $R^3$ and $R^4$ each independently represent an alkyl group having 1 or 2 carbon atoms), and the like are exemplary examples. The substituted alkyl group preferably has 1 or more and 3 or less carbon atoms.

As the vinyl compound represented by Formula (2),

methyl (meth)acrylate (Tg': 281 K or 378 K),
ethyl methacrylate (Tg': 338),
n-butyl methacrylate (Tg': 293),
isobutyl methacrylate (Tg': 321),
n-stearyl (meth)acrylate (Tg': 303 or 311),
tert-butyl (meth)acrylate (Tg': 314 or 380 K),
cyclohexyl (meth)acrylate (Tg': 288 or 339 K),
isobolonyl (meth)acrylate (Tg': 367 or 453 K),
benzyl (meth)acrylate (Tg': 279 K or 327 K),
2-hydroxyethyl methacrylate (Tg': 328 K),
2-hydroxypropyl methacrylate (Tg': 299),
(meth)acrylate (Tg': 379 K or 417 K),
2-hydroxy-3-phenoxypropyl acrylate (Tg': 290 K),

N, N, N-dimethylaminoethyl (meth)acrylate (Tg': 392 K or 291 K),
N, N, N-diethylaminoethyl methacrylate (Tg': 293 K),
glycidyl methacrylate (Tg': 319 K),
tetrahydrofurfuryl methacrylate (Tg': 333 K),
and the like can be specific examples.

$$CH=CR^b\text{-}CO\text{-}O\text{-}R^7\text{-}CO\text{-}CR^6=CH \cdots \qquad (3)$$

(In the formula, $R^5$ and $R^6$ each independently represent a hydrogen atom or a methyl group, and $R^7$ represents an alkylene group having 4 or more and 10 or less carbon atoms.)

$R^5$ and $R^6$ in Formula (3) are preferably the same group.

As the vinyl compound represented by Formula (3),

neopentylglucoal di(meth)acrylate (Tg': 390 K or 305.5 K),
3-methyl-1,5pentanediol diacrylate (Tg': 378 K),
1,6-hexanediol diacrylate (Tg': 336 K),
1,9-nonanediol diacrylate (Tg': 341 K).
and the like can be specific examples.

As the vinyl compound including a (meth)acryloylamide group, a compound represented by Formula (4) and having Tg' in the specific range described above can be an exemplary example.

$$CH=CR^8\text{ -}CO\text{ -}N\text{-}R^9 \cdots \qquad (4)$$

(In the formula, $R^8$ represents a hydrogen atom or an alkyl group, $R^9$ represents an amino group ($-R^{10}R^{11}$: $R^{10}$ and $R^{11}$ each independently represent a hydrogen atom or an alkyl group having 1 or more and 3 or less carbon atoms, and $R^{10}$ and $R^{11}$ may be bonded to form an aliphatic heterocyclic compound residue of a morpholinyl group or the like).)

As the vinyl compound represented by Formula (4),

acryloylmorpholine (Tg': 418 K),
N,N-dimethylacrylamide (Tg': 119 K),
N,N-diethylacrylamide (Tg': 354 K),
N-isopropylacrylamide (Tg': 407 K),
and the like can be specific examples.

The Tg' of the monomer is a glass transition temperature measured by a measurement method using a homopolymer obtained by homopolymerization of the monomer. As the Tg' of the monomer, a value measured by a method based on JIS K7121-1987 or JIS K 6240 with a differential scanning calorimetry (DSC), or a catalog value can be used. A monomer for applying the Tg' in the specific range described above used in the present invention may be selected and may be used as the monomer ($A_{HTg}$). In addition, a value of the Tg' is shown in the following brackets of the above compound as a reference value for selecting the monomer ($A_{HTg}$).

In general, for an easily adhesive material such as stainless steel (SUS), the pressure-sensitive adhesive strength acts stronger than the ease of sticking to an adherend (tackiness). Accordingly, in a case where the pressure-sensitive adhesiveness index is low (the pressure-sensitive adhesiveness index is lower than 1.5), the adhesiveness increases.

On the other hand, for a hardly adhesive resin represented by POM, the ease of sticking to an adherend (tackiness) acts stronger than the pressure-sensitive adhesive strength. Accordingly, in a case where the pressure-sensitive adhesiveness index is high, the adhesiveness increases.

However, in a case where the pressure-sensitive adhesiveness index is excessively high, the holding power decreases and the adhesiveness cannot be exhibited. Therefore, it is necessary to adjust the pressure-sensitive adhesiveness index to an appropriate value.

In the present invention, a characteristic for POM and a pressure-sensitive adhesiveness index of various acrylic copolymers are compared, and it was found that a suitable pressure-sensitive adhesiveness index of $1.5 \times 10^{-2}$ or more and $2.0 \times 10^{-2}$ or less having excellent adhesiveness or high-temperature holding property, load resistance, and impact resistance is obtained even for the hardly adhesive resin represented by POM. In addition, a characteristic for POM of an acrylic copolymer having various monomer compositions is compared, and the acrylic copolymer (A) was found as an acrylic copolymer having excellent adhesiveness or high-temperature holding property, load resistance, and impact resistance even for the hardly adhesive resin represented by POM.

In the present invention, the desired effects are obtained mainly by selecting and combining 650,000 or more and 1,200,000 or less as the weight average molecular weight of the acrylic copolymer, 11.5% by mass or more as the amount of the monomer ($A_{HTg}$) in all monomer components, and the range described above as the pressure-sensitive adhesiveness index.

For reference, the pressure-sensitive adhesiveness index of the acrylic copolymer in each synthesis example of Patent Document 1 is in a range of 1.18 to 1.48 and a range of 2.30 to 3.62. Examples of Patent Documents 2 and 3 disclose acrylic copolymers in which a pressure-sensitive adhesiveness index satisfies the range described above, but these acrylic copolymers do not disclose an acrylic copolymer satisfying the three requirements described above ("the range of the weight average molecular weight", "the amount of the monomer ($A_{HTg}$) in all monomer components", and "the range of the pressure-sensitive adhesiveness index") at the same time. The pressure-sensitive adhesiveness index of the acrylic copolymer in each example of Patent Document 4 is in a range of 2.22 to 2.90.

(Crosslinking agent)

As the crosslinking agent, for example, other than an isocyanate-based crosslinking agent, an epoxy-based crosslinking agent, a melamine-based crosslinking agent, and a peroxide-based crosslinking agent, a urea-based crosslinking agent, a metal alkoxide-based crosslinking agent, a metal chelate-based crosslinking agent, a metal saltbased crosslinking agent, a carbodiimide-based crosslinking agent, an oxazoline-based crosslinking agent, an aziridine-based crosslinking agent, an amine-based crosslinking agent, and the like are exemplary examples. Among these, an isocyanate-based crosslinking agent, an epoxy-based crosslinking agent, or a metal chelate-based crosslinking agent is preferable.

As the isocyanate-based crosslinking agent, a lower aliphatic polyisocyanates such as butylene diisocyanate, hexamethylene diisocyanate, or the like; alicyclic isocyanates such as cyclopentylene diisocyanate, cyclohexylene diisocyanate, isophorone diisocyanate, or the like; aromatic isocyanates such as 2,4-tolylene diisocyanate, 4,4'-diphenylmethane diisocyanate, xylylene diisocyanate, or the like; an isocyanate adduct such as a trimethylol propane/tolylene diisocyanate trimer adduct (manufactured by Nippon Polyurethane Industry Co., Ltd., product name "CORONATE L"), a trimethylol propane/hexamethylene diisocyanate trimer adduct (manufactured by Nippon Polyurethane Industry Co., Ltd., product name "CORONATE HL"), an isocyanurate of hexamethylene diisocyanate (manufactured by Nippon Polyurethane Industry Co., Ltd., product name "CORONATE HX"), or the like; and the like are specific examples. The amount of the isocyanate-based crosslinking agent is typically 0.1 parts by mass or more and 20 parts by mass or less, and more preferably 0.5 parts by mass or more and 10 parts by mass or less, with respect to 100 parts by mass of the acrylic copolymer (A).

As the epoxy-based crosslinking agent, for example, N,N,N',N'-tetraglycidyl-m-xylenediamine, diglycidylaniline, 1,3-bis(N,N-diglycidylaminomethyl)cyclohexane (manufactured by Mitsubishi Gas Chemical Company, Inc., product name "TETRAD C"), N,N,N',N'-tetraglycidyl-m-xylylenediamine (manufactured by Mitsubishi Gas Chemical Company, Inc., product name "TETRAD X"), 1,6-hexanediol diglycidyl ether (manufactured by KYOEISHA CHEMICAL Co., Ltd., product name "Epolight 1600"), neopentyl glycol diglycidyl ether (manufactured by KYOEISHA CHEMICAL Co., Ltd., product name "Epolight 1500NP"), ethylene glycol diglycidyl ether (manufactured by KYOEISHA CHEMICAL Co., Ltd., product name "Epolight 40E"), propylene glycol diglycidyl ether (manufactured by KYOEISHA CHEMICAL Co., Ltd., product name "Epolight 70P"), polyethylene glycol diglycidyl ether (manufactured by NOF CORPORATION, product name "EPIOLE-400"), polypropylene glycol diglycidyl ether (manufactured by NOF CORPORATION, product name "EPIOL P-200"), sorbitol polyglycidyl ether (manufactured by Nagase ChemteX Corporation, product name "DENACOL EX-611"), glycerol polyglycidyl ether (manufactured by Nagase ChemteX Corporation, product name "DENACOL EX-314"), pentaerythritol polyglycidyl ether, polyglycerol polyglycidyl ether (manufactured by Nagase ChemteX Corporation, product name "DENACOLEX-512"), sorbitan polyglycidyl ether, trimethylolpropane polyglycidyl ether, diglycidyl ester adipate, diglycidyl ester o-phthalate, triglycidyl-tris(2-hydroxyethyl)isocyanurate, resorcinol diglycidyl ether, bisphenol-S-diglycidyl ether, an epoxy-based resin having two or more epoxy groups in a molecule, and the like are exemplary examples. The amount of the epoxy-based crosslinking agent is 0.01 parts by mass or more and 10 parts by mass or less, and more preferably 0.03 parts by mass or more and 5 parts by mass or less with respect to 100 parts by mass of the acrylic copolymer (A).

As the metal chelate-based crosslinking agent, for example, a metal chelate compound in which the metal atom is aluminum, zirconium, titanium, zinc, iron, tin, or the like can be used. Among these, an aluminum chelate compound or a titanium chelate compound is preferable.

As the aluminum chelate compound, for example, diisopropoxyaluminum monooleyl acetoacetate, monoisopropoxyaluminum bisoleyl acetoacetate, monoisopropoxyaluminum monooleate monoethylacetoacetate, diisopropoxyaluminum monolaurylacetoacetate, diisopropoxyaluminum monostearylacetoacetate, diisopropoxyaluminum monoisostearylacetoacetate, monoisopropoxyaluminum mono-N-lauroyl-β-alanate monolaurylacetoacetate, aluminum tris(acetylacetonate), acetylacetonate aluminum bis(ethylacetoacetate), monoacetylacetonate aluminum bis(isobutylacetoacetate) chelate, monoacetylacetonate aluminum bis(2-ethylhexylacetoacetate) chelate, monoacetylacetonate aluminum bis(dodecylacetoacetate) chelate, monoacetylacetonate aluminum bis(oleylacetoacetate) chelate, and the like are exemplary examples.

As the titanium chelate compound, for example, titanium diisopropoxy bis(acetylacetonate), titanium tetra-n-butyrate, titanium tetra-2-ethylhexanoate, titanium tetraacetylacetonate, titanium diisopropoxy bis(ethylacetoacetate), titanium octylene glycolate, and the like are exemplary examples.

As other metal chelate compounds, zirconium tetraacetyl acetonate, zirconium tributoxy monoacetyl acetonate, and the like are exemplary examples.

The metal chelate-based crosslinking agents may be used singly or in combination of two or more.

The amount of the metal chelate-based crosslinking agent is typically 0.01 parts by mass or more and 10 parts by mass or less, more preferably 0.03 parts by mass or more and 7 parts by mass or less, and even more preferably 0.05 parts by mass or more and 5 parts by mass or less with respect to 100 parts by mass of the acrylic copolymer (A).

(Polymerization method)

The acrylic copolymer (A) is obtained by copolymerizing each of the monomers described above. The polymerization method is not particularly limited, but radical solution polymerization or radical emulsion polymerization is preferable from a viewpoint of easy polymer design. In addition, an acrylic syrup consisting of the acrylic copolymer (A) and a monomer thereof may be prepared first, and the acrylic syrup may be mixed with a crosslinking agent and an additional photopolymerization initiator to be polymerized.

(Pressure-sensitive adhesiveness imparting agent)

A pressure-sensitive adhesiveness imparting agent (C) may be added to the pressure-sensitive adhesive composition as necessary for the purpose of adjusting the pressure-sensitive adhesive strength or the like. As the pressure-sensitive adhesiveness imparting agent, pressure-sensitive adhesiveness imparting resins such as a rosin-based resin, a terpene-based resin, a petroleum-based resin, an alkylphenol resin, a xylene-based resin, and other resins are specific examples. Two or more kinds of these may be used in combination. Among these, a rosin-based resin and a xylene-based resin are particularly preferable.

A softening point of the pressure-sensitive adhesiveness imparting agent is preferably 125°C or higher and more preferably 135°C or higher. This softening point is a value measured based on JIS K 2531 (ring and ball method).

As the rosin-based resin, a hydrogenated resin, a disproportionation resin, a polymerized ester resin, and the like are exemplary examples. As the terpene-based resin, a terpene phenol resin, an α pinene-based resin, a β pinene-based resin, and the like are exemplary examples. As the petroleum-based resin, an aliphatic resin, an aromatic resin, and the like are exemplary examples.

The proportion of the pressure-sensitive adhesiveness imparting agent (C) with respect to 100 parts by mass of the acrylic copolymer (A) can be preferably 0 parts by mass or more and 15 parts by mass or less, and more preferably selected from 0 parts by mass or more and 12 parts by mass or less. In a case where the amount of the pressure-sensitive adhesiveness imparting agent added is more than 15 parts by mass, the high-temperature holding property may decrease. The lower limit of the amount in a case of using the pressure-sensitive adhesiveness imparting agent is not particularly limited, can be suitably set, and can be set to 1 part by mass or more with respect to 100 parts by mass of the acrylic copolymer (A).

(Filler, pigment)

The pressure-sensitive adhesive composition of the present invention may further include at least one kind of various additives such as an inorganic filler, a light-shielding filler, a pigment, and the like.

The proportion of the filler or the pigment with respect to 100 parts by mass of the acrylic copolymer (A) can be selected from a range of 0.1 parts by mass or more and 100 parts by mass or less.

As the inorganic filler, silica, calcium carbonate, and alumina are specific examples.

As the light-shielding filler, carbon black, carbon nanotube, and a black inorganic filler are specific examples.

As the pigment, carbon black, aniline black, acetylene black, and Ketjen black are specific examples.

<Pressure-sensitive adhesive tape>

The pressure-sensitive adhesive tape of the present invention includes a pressure-sensitive adhesive layer including the pressure-sensitive adhesive composition described above.

The pressure-sensitive adhesive tape can be provided as a so-called "baseless type" which is formed of only a pressure-sensitive adhesive layer at the time of use, or a type including a pressure-sensitive adhesive layer on at least one surface of a base material and the base material and the pressure-sensitive adhesive layer are integrated and used.

(a) to (c) of FIG. 1 are diagrams showing an embodiment of the pressure-sensitive adhesive tape according to the present invention.

The pressure-sensitive adhesive tape shown in (a) of FIG. 1 is a single-sided pressure-sensitive adhesive tape, and a pressure-sensitive adhesive layer 2 formed of the pressure-sensitive adhesive composition according to the present invention is provided on an upper surface (surface A) of a tape-shaped base material 1.

The pressure-sensitive adhesive tape shown in (b) of FIG. 1 is a double-sided pressure-sensitive adhesive tape, and pressure-sensitive adhesive layers 2-1 and 2-2 are provided on both surfaces (upper surface: surface A, and lower surface: surface B) of the tape-shaped base material 1, and at least one of two pressure-sensitive adhesive layers is formed of a pressure-sensitive adhesive layer formed of the pressure-sensitive adhesive composition according to the present invention.

The pressure-sensitive adhesive tape shown in (c) of FIG. 1 is a baseless type pressure-sensitive adhesive tape and is form of the pressure-sensitive adhesive layer 2.

These pressure-sensitive adhesive tapes can be manufactured by a well-known method. As a typical method, a method for evenly applying a pressure-sensitive adhesive composition onto a support for forming a pressure-sensitive adhesive layer, and performing a crosslinking reaction to form a pressure-sensitive adhesive layer can be an exemplary example.

By using the support that becomes the base material 1 shown in (a) and (b) of FIG. 1 for forming the pressure-sensitive adhesive layer, the pressure-sensitive adhesive layer can be formed directly on the base material.

Alternatively, the pressure-sensitive adhesive layers 2, 2-1, and 2-2 can also be formed by sticking the pressure-sensitive adhesive layer formed on the support for forming the pressure-sensitive adhesive layer onto the base material 1 shown in (a) and (b) of FIG. 1 by transfer.

The pressure-sensitive adhesive tape can be efficiently manufactured by using a sheet-shaped support for forming the pressure-sensitive adhesive layer and using a method for cutting and dividing the pressure-sensitive adhesive layer formed on the support into a desired tape shape.

The baseless type pressure-sensitive adhesive tape shown in (c) of FIG. 1 can be obtained by transferring the pressure-sensitive adhesive layer formed on the support onto a release liner.

As the support for transfer, release paper, a plastic film having a releasable surface, or the like can be used.

For a crosslinking reaction of the pressure-sensitive adhesive composition on the support for forming the pressure-sensitive adhesive layer, a crosslinking reaction due to heating and/or ultraviolet irradiation can be used.

On a surface A of the base material 1 of (a) of FIG. 1, a surface treatment such as corona discharge treatment can be performed, an undercoat layer can be provided, or both can be performed, if necessary. Therefore, it is possible to improve tight adhesiveness of the pressure-sensitive adhesive layer 2 to the base material 1.

On a surface B of the base material 1 of (a) of FIG. 1, a release layer can be provided, if necessary. Therefore, it is possible to prevent the pressure-sensitive adhesive layer 2 from being transferred to the surface B of the base material 1 and maintain ease of rewinding in a case of winding the pressure-sensitive adhesive tape into a roll shape.

On at least one of the surface A and the surface B of the base material 1 of (b) of FIG. 1, a surface treatment such as corona discharge treatment can be performed, an undercoat layer can be provided, or both can be performed, if necessary. Therefore, it is possible to improve tight adhesiveness of the pressure-sensitive adhesive layer 2-1 and/or the pressure-sensitive adhesive layer 2-2 to the base material 1.

A thickness of the pressure-sensitive adhesive layer is preferably 5 $\mu$m or more and 100 $\mu$m or less, and more preferably 10 $\mu$m or more and 80 $\mu$m or less.

As a material constituting the base material 1, for example, a plastic film, a metal foil, paper, a woven fabric, a non-woven fabric, and a foamed body are exemplary examples. Two or more kinds of these may be used in combination. As a constituent material of a plastic film for a base material, polyether ether ketone (PEEK), polyimide (PI), polyethylene terephthalate (PET), polyethylene naphthalate (PEN), biaxially oriented polypropylene (OPP), polyphenylide (PPS), and the like are exemplary examples.

As a constituent material of the foamed body, urethane, polyethylene (PE), polypropile (PP), or the like are exemplary examples.

[Examples]

Hereinafter, the present invention will be described in more detail with reference to Examples and Comparative Examples. In the following description, "part" means part by mass, and "%" means % by mass.

[Preparation of acrylic copolymer (A)]

Monomer components shown in Tables 1 and 2, ethyl acetate as a solvent, n-dodecanethiol as a chain transfer agent, and 0.1 parts of PEROYL L as a radical polymerization initiator were put into a reactor including a stirrer, a thermometer, a reflux condenser, and a nitrogen gas introduction tube. A nitrogen gas was enclosed in the reactor, and a polymerization reaction was carried out at 68°C for 3 hours under a nitrogen gas stream while stirring, and then at 78°C for 3 hours at a polymerization concentration of 50%. After that, the mixture was cooled to room temperature, and an antioxidant was added. As a result, the acrylic copolymer (A) was obtained.

The numerical values added to the components in the table are blending amounts (%), and compound names of the components indicated by abbreviations are as follows.

· "2-EHA": 2-ethylhexyl acrylate
· "AA": acrylic acid
· "BA": n-butyl acrylate
· "MA": methyl acrylate
· "Vac": vinyl acetate
· "4-HBA" = 4-hydroxybutyl acrylate
· "2-HEA" = 2-hydroxyethyl acrylate

In the monomer compounds, "AA", "MA", and "Vac" are the monomer ($A_{HTg}$) having the Tg' of 273 K or more and 437 K or less, and the Tg' of the other monomers is beyond the range.

In Examples 1 to 5, a monomer composition and a polymerization degree were adjusted so that the pressure-sensitive adhesiveness index was $1.5 \times 10^{-2}$ or more and $2.0 \times 10^{-2}$ or less.

In Comparative Example 1, the monomer composition and the polymerization degree were adjusted so that the pressure-sensitive adhesiveness index was $2.0 \times 10^{-2}$ or more.

In Comparative Examples 2 to 5, the monomer composition and the polymerization degree were adjusted so that the pressure-sensitive adhesiveness index was $1.5 \times 10^{-2}$ or less.

[Preparation of pressure-sensitive adhesive tape]

1.3 parts of CORONATE L (manufactured by Nippon Polyurethane Industry Co., Ltd., product name CORONATE L: a solid content concentration 45%) as the crosslinking agent was added to and mixed with 100 parts of a solid content of the acrylic copolymer (A) adjusted using each monomer composition shown in Tables 1 and 2, to prepare a pressure-sensitive adhesive composition.

This pressure-sensitive adhesive composition was applied onto silicone-treated release paper having a thickness of approximately 0.12 mm so that a thickness of the pressure-sensitive adhesive composition after drying was 0.05 mm. Next, the solvent was removed and dried at 110°C for 2 minutes, and a crosslinking reaction was carried out. After that, the crosslinking reaction was carried out for 2 minutes with an infrared heater set so that an effective temperature of the infrared heater was 105°C or higher and 110°C or lower, to form the pressure-sensitive adhesive layer. This pressure-sensitive adhesive layer was stuck to both surfaces of a polyolefin material sheet base material having a thickness of 0.15 mm subjected to a corona discharge treatment. Then, it was cured at 40°C for 3 days to obtain a double-sided pressure-sensitive adhesive tape including the pressure-sensitive adhesive layer having a thickness of 0.05 mm.

The numerical values added to the components in the table are blending amounts (parts), and compound names of the components are as follows.

· "CORONATE L": an isocyanate-based crosslinking agent (manufactured by Nippon Polyurethane Industry Co., Ltd., product name: CORONATE L)

<Evaluation test>

The pressure-sensitive adhesive tape obtained in each of the examples and the comparative examples was evaluated by the following methods, and evaluation results were shown in Tables 1 and 2.

(Pressure-sensitive adhesive strength)

The pressure-sensitive adhesive strength was measured using a test method based on JIS Z 0237:2000, and the pressure-sensitive adhesive strength was evaluated according to the following criteria. As the adherend, a stainless

13

steel sheet (SUS304BA sheet), a POM plate (manufactured by Toray Plastics Precision Co., Ltd., POM (NC)), a polycarbonate plate (manufactured by C.I. TAKIRON Corporation, PC 1600) (these are shown as "SUS", "POM", and "PC plate" in Tables 1 and 2) were used.

C: less than 5 N/10 mm
B: 5 N/10 mm or more and less than 10 N/10 mm
A: 10 N/10 mm or more

In the evaluation criteria, the evaluation is desirably B or higher without zipping.

(Impact resistance)

For the impact resistance, a DuPont impact resistance test method was used.
That is, as shown in (a) of FIG. 2, the pressure-sensitive adhesive tape was cut so that a planar shape has a frame shape so that a rectangular peripheral portion having $L_2$ (horizontal) = 45 mm and $L_1$ (vertical) = 50 mm remains with W (width) of 1 mm, to prepare a measurement sample 6. (b) of FIG. 2 schematically shows an outline of a test device, (b) of FIG. 2 shows the sample 6 and adherends 5 and 7 as a cross-sectional view in a thickness direction. As shown in (b) of FIG. 2, 100 g of a jig 4 is attached, and 200 g of a weight 3 is dropped from above three times each until the adherend (a glass plate) 7 on a lower side is dropped from each height of 100 mm, 125 mm, 150 mm, 175 mm, ....
The combination of the adherends included a perforated PC plate (manufactured by C.I. TAKIRON Corporation, PC1600) (thickness 4 mm × horizontal 50 mm × vertical 100 mm) (a window cut of a square of 40 mm × 40 mm in the center) 5 and the glass plate 7 (manufactured by Asahi Glass Co., Ltd., FL2) (thickness 1.9 mm × horizontal 50 mm × vertical 60 mm), and set so that the glass plate 7 side becomes a lower side.
Based on the height of the weight in a case where the adherend was dropped, the impact resistance was evaluated according to the following criteria.

D: Dropped at 100 mm
C: Dropped at 125 mm
B: Dropped at 150 mm
A: Dropped at 175 mm or more

In the evaluation criteria, the evaluation result is desirably B or higher.

(Tackiness)

The tackiness was measured using a test method based on JIS Z 0237. An inclination angle was 10°.
Based on measured values, the tackiness was evaluated according to the following criteria.

D: less than 5
C: 5 or more and less than 10
B: 10 or more and less than 15
A: 15 or more

In the evaluation criteria, the evaluation result is desirably B or higher.

(Load resistance)

Regarding the load resistance, as shown in FIG. 3, an L-shaped jig 9 (25 g) made of SUS304 was stuck to an adherend (the POM plate or a polycarbonate plate) with a pressure-sensitive adhesive tape 8 (10 mm × 10 mm; a base material 8a, a pressure-sensitive adhesive layer 8b) and was allowed to stand at 90°C, and the time until it was dropped was measured.
Based on the measured values, the load resistance, which is an index of the high-temperature holding property, was evaluated based on the following criteria.

C: less than 5 minutes
B: 5 minutes or more and less than 10 minutes
A: 10 minutes or more

In the evaluation criteria, the evaluation result is desirably B or higher.

[Table 1]

| | | | Example 1 | Example 2 | Example 3 | Example 4 | Example 5 |
|---|---|---|---|---|---|---|---|
| Monomer composition | | 2-EHA | 87.9 | 87.9 | 87.9 | 87.9 | 87.9 |
| | | AA | 7 | 7 | 7 | 7 | 7 |
| | | BA | 0 | 0 | 0 | 0 | 0 |
| | | MA | 3 | 3 | 3 | 3 | 3 |
| | | Vac | 2 | 2 | 2 | 2 | 2 |
| | | 4-HBA | 0 | 0 | 0 | 0 | 0 |
| | | HEA | 0 | 0 | 0 | 0 | 0 |
| | | Total Mass | 100 | 100 | 100 | 100 | 100 |
| Tg(K):a | | | 198.5 | 198.5 | 198.5 | 198.5 | 198.5 |
| Recalculated Tg (K):a | | | 213.2 | 213.2 | 213.2 | 213.2 | 213.0 |
| Mw($\times 10^4$):b | | | 104 | 81 | 70 | 80 | 75 |
| Blending ratio (%) of monomer having Tg of 273 K or more and 437 K or less:c | | | 12.0 | 12.0 | 12.0 | 12.0 | 12.0 |
| Pressure-sensitive adhesiveness index($1/3\sqrt{(a \times b \times c)}$)($\times 10^{-2}$) | | | 1.59 | 1.56 | 1.82 | 1.74 | 1.78 |
| Recalculated pressure-sensitive adhesiveness index($1/3\sqrt{(a \times b \times c)}$)($\times 10^{-2}$) | | | 1.55 | 1.69 | 1.77 | 1.70 | 1.73 |
| Pressure-sensitive adhesiveness index is $1.5 \times 10^{-2}$ or more $2.0 \times 10^{-2}$ or less | | | B | B | B | B | B |
| Pressure-sensitive adhesiveness | SUS (N/10mm) | | 11.2 | 8.8 | 10.0 | 8.8 | 8.3 |
| | | | A | B | A | B | B |
| | POM (N/10mn) | | 8.7 | 8.8 | 8.0 | 8.2 | 8.6 |
| | | | B | B | B | B | B |
| | PC plate (N/10mm) | | 12.7 | 11.1 | 11.4 | 13.4 | 12.7 |
| | | | A | A | A | A | A |
| Impact resistance | DuPont impact resistance | PC platexglass | dropped at 175mm | dropped at 250mm | dropped at 175mm | dropped at 200mm | dropped at 225mm |
| | | | A | A | A | A | A |
| Tackiness | ball tack 10° | | 15 | 13 | 15 | 15 | 15 |
| | | | A | B | A | A | A |
| Load resistance | 90°C 50 g | POM | 16 min 33 sec | 15 minl4 sec | 13 min 38 sec | 27 min 47 sec | 12 min 37 sec |
| | | | A | A | A | A | a |
| | | PC plate | 22 min 41 sec | 28 min 27 sec | 18 min 31 sec | 23 min 40 sec | 14 min 7 sec |
| | | | A | A | A | A | A |

[Table 2]

| | | Comparative Example 1 | Comparative Example 2 | Comparative Example 3 | Comparative Example 4 | Comparative Example 5 |
|---|---|---|---|---|---|---|
| Monomer composition | 2-EHA | 86 | 70 | 70 | 70 | 70 |
| | AA | 7 | 10 | 10 | 10 | 10 |
| | BA | 0 | 4.9 | 4.9 | 4.9 | 4.9 |
| | MA | 3 | 13 | 13 | 13 | 13 |
| | Vac | 2 | 2 | 2 | 2 | 2 |
| | 4-HBA | 2 | 0.1 | 0.1 | 0.1 | 0.1 |
| | HEA | 0 | 0 | 0 | 0 | 0 |
| | Total mass | 100 | 100 | 100 | 100 | 100 |
| Tg(K):a | | 1996 | 210.7 | 210.7 | 213.0 | 213.0 |
| Recalculated Tg(K):a | | 213.8 | 223.8 | 223.8 | 223.8 | 223.8 |
| Mw(×10$^4$):b | | 35 | 98 | 92 | 120 | 70 |
| Blending ratio (%) of monomer having Tg of 273 K or higher and 437 K or less:c | | 12.0 | 23.1 | 23.1 | 23.1 | 23.1 |
| Pressure-sensitive adhesiveness index $(1/3\sqrt{(a \times b \times c)})(\times 10^2)$ | | 2.28 | 1.28 | 1.31 | 1.19 | 1.43 |
| Recalculated pressure-sensitive adhesiveness index $(1/3\sqrt{(a \times b \times c)})(\times 10^{-2})$ | | 2.23 | 1.25 | 1.28 | 1.17 | 1.40 |
| Pressure-sensitive adhesiveness index $1.5 \times 10^{-2}$ or more $2.0 \times 10^{-2}$ or less | | D | D | D | D | D |
| Pressure-sensitive adhesiveness | SUS (N/10mm) | 9.8 / B | 13.6 / A | 18.4 / A | 14.3 / A | 14.6 / A |
| | POM (N/10mm) | 4.4* / C | 4.8* / c | 5.3* / B | 7.9 / B | 7.9 / B |
| | PC plate (N/10mm) | 7.6* / B | 8.2* / B | 9.6* / B | 10.6* / A | 9.8* / B |

(continued)

| | | | Comparative Example 1 | Comparative Example 2 | Comparative Example 3 | Comparative Example 4 | Comparative Example 5 |
|---|---|---|---|---|---|---|---|
| Impact resistance | DuPont impact resistance | PC platexglass | dropped at 150mm | dropped at 100mm | dropped at 125mm | dropped at 125mm | dropped at 125mm |
| | | | B | D | C | C | C |
| Tackiness | ball tack 10° | | 11 | less than 5 | less than 5 | 5 | 5 |
| | | | B | D | D | C | C |
| Load resistance | 90°C 50 g | POM | 7 min 48 sec | 7 min 55 sec | 11 min 21 sec | 16 min 9 sec | 10 min 3 sec |
| | | | B | B | A | A | A |
| | | PC plate | 13 min 56 sec | 20 min 28 sec | 16 min34 sec | 23 min 28 sec | 21 min 52 sec |
| | | | A | A | A | A | A |
| *: with zipping | | | | | | | |

[Industrial Applicability]

The pressure-sensitive adhesive composition of the present invention is useful as a pressure-sensitive adhesive composition or a pressure-sensitive adhesive tape having excellent sticking property to a resin material suitable for 5G used in a portable electronic device, a vehicle sensor, and a recorder along with 5G of a mobile communication system, particularly, a hardly adhesive resin represented by POM, the pressure-sensitive adhesive composition or the pressure-sensitive adhesive tape for sticking to a base material or fixing a member formed of such a material.

**Claims**

1. A pressure-sensitive adhesive composition comprising:

    an acrylic copolymer (A); and
    a crosslinking agent (B),
    wherein a weight average molecular weight of the acrylic copolymer (A) is 650,000 or more and 1,200,000 or less, and an amount of a monomer ($A_{HTg}$) having Tg' (a glass transition temperature in a case where the monomer is homopolymerized) of 273 K or higher and 437 K or lower in all monomer components of the acrylic copolymer (A) is 11.5% by mass or more, and
    in a case where a theoretical glass transition temperature (theoretical Tg) of the acrylic copolymer (A) is defined as a, a weight average molecular weight ($\times 10^4$) is defined as b, and an amount of the monomer ($A_{HTg}$) in all monomer components is defined as c, a pressure-sensitive adhesiveness index represented by Expression (1): is $1.5 \times 10^{-2}$ or more and $2.0 \times 10^{-2}$ or less.

$$\frac{1}{\sqrt[3]{a \times b \times c}} \quad \cdots (1)$$

2. The pressure-sensitive adhesive composition according to Claim 1, wherein the theoretical Tg of the acrylic copolymer (A) is 223 K or lower.

3. The pressure-sensitive adhesive composition according to Claim 1, wherein the acrylic copolymer (A) is an acrylic copolymer including a carboxyl group and a hydroxyl group.

4. The pressure-sensitive adhesive composition according to Claim 3, wherein a monomer component of the acrylic copolymer (A) includes alkyl (meth)acrylate ester (A1) including an alkyl group having 4 or more and 12 or less carbon atoms, alkyl (meth)acrylate ester (A2) including an alkyl group having 1 or more and 3 or less carbon atoms, a carboxyl group-containing monomer (A3), and a hydroxyl group-containing monomer (A4).

5. The pressure-sensitive adhesive composition according to Claim 4, wherein the monomer component of the acrylic copolymer (A) includes 50% by mass or more and 90% by mass or less of the alkyl (meth)acrylate ester (A1) including an alkyl group having 4 or more and 12 or less carbon atoms, 3% by mass or more and 10% by mass or less of the alkyl (meth)acrylate ester (A2) including an alkyl group having 1 or more and 3 or less carbon atoms, 1% by mass or more and 10% by mass or less of the carboxyl group-containing monomer (A3), and 0.1% by mass or more and 0.5% by mass or less of the hydroxyl group-containing monomer (A4) in 100% by mass of all monomer components.

6. The pressure-sensitive adhesive composition according to Claim 5, wherein a total amount of the carboxyl group-containing monomer (A3) and the hydroxyl group-containing monomer (A4) is 10.5% by mass or less.

7. The pressure-sensitive adhesive composition according to Claim 4, wherein the monomer component of the acrylic copolymer includes a vinyl compound monomer (A5) other than the monomer components (A1) to (A4).

8. The pressure-sensitive adhesive composition according to Claim 5,
wherein the monomer component of the acrylic copolymer includes 10% by mass or less of a vinyl compound monomer (A5) other than the monomer components (A1) to (A4).

9. A pressure-sensitive adhesive tape including a pressure-sensitive adhesive layer formed of the pressure-sensitive adhesive composition according to any one of Claims 1 to 8.

10. The pressure-sensitive adhesive tape according to Claim 9, comprising:

a sheet-shaped base material; and
the pressure-sensitive adhesive layer provided on at least one surface of the sheet-shaped base material.

## FIG. 1

## FIG. 2

## FIG. 3

## INTERNATIONAL SEARCH REPORT

| International application No. |
|---|
| PCT/JP2021/014053 |

| A. CLASSIFICATION OF SUBJECT MATTER |
|---|
| C09J 133/06(2006.01)i; C09J 7/38(2018.01)i; C09J 11/06(2006.01)i |
| FI: C09J133/06; C09J11/06; C09J7/38 |
| According to International Patent Classification (IPC) or to both national classification and IPC |

| B. FIELDS SEARCHED |
|---|
| Minimum documentation searched (classification system followed by classification symbols) |
| C09J1/00-201/10 |

| Documentation searched other than minimum documentation to the extent that such documents are included in the fields searched |
|---|
| Published examined utility model applications of Japan     1922-1996 |
| Published unexamined utility model applications of Japan     1971-2021 |
| Registered utility model specifications of Japan     1996-2021 |
| Published registered utility model applications of Japan     1994-2021 |

| Electronic data base consulted during the international search (name of data base and, where practicable, search terms used) |
|---|
|  |

### C. DOCUMENTS CONSIDERED TO BE RELEVANT

| Category* | Citation of document, with indication, where appropriate, of the relevant passages | Relevant to claim No. |
|---|---|---|
| X<br>A | JP 2013-163746 A (LINTEC CORP) 22 August 2013 (2013-08-22) claim 1, paragraphs [0029]-[0030], [0066]-[0069], [0076], table 1, example 1 | 1, 3-4, 7-10<br>2, 5-6 |
| X<br>A | JP 6572566 B2 (DAINIPPON INK & CHEMICALS) 11 September 2019 (2019-09-11) claim 1, paragraphs [0042], [0130]-[0132], [0141], [0158], example 8 | 1, 3-4, 7-10<br>2, 5-6 |
| X<br>A | JP 2012-1647 A (TERAOKA SEISAKUSHO:KK) 05 January 2012 (2012-01-05) table 1, production example 1, table 2, example 1 | 1, 9-10<br>2-8 |
| X<br>A | JP 2011-6608 A (NITTO DENKO CORP) 13 January 2011 (2011-01-13) paragraphs [0057], [0067], table 1-2, comparative example 1 | 1-2, 9-10<br>3-8 |
| A | JP 2015-151514 A (SOKEN KAGAKU KK) 24 August 2015 (2015-08-24) paragraphs [0060]-[0064], table 1 | 1-10 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 June 2021 (21.06.2021) | 29 June 2021 (29.06.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**
Information on patent family members

International application No.

PCT/JP2021/014053

| Patent Documents referred in the Report | Publication Date | Patent Family | Publication Date |
|---|---|---|---|
| JP 2013-163746 A | 22 Aug. 2013 | (Family: none) | |
| JP 6572566 B2 | 11 Sep. 2019 | US 2017/0015872 A1 claim 1, paragraphs [0056], [0178], [0197], table 2, example 8 WO 2015/137437 A1 TW 201544570 A CN 105916952 A KR 10-2016-0119165 A | |
| JP 2012-1647 A | 05 Jan. 2012 | (Family: none) | |
| JP 2011-6608 A | 13 Jan. 2011 | US 2010/0330354 A1 paragraphs [0061], [0071], tables 1-2 CN 101935508 A KR 10-2011-0000499 A TW 201127929 A | |
| JP 2015-151514 A | 24 Aug. 2015 | (Family: none) | |

Form PCT/ISA/210 (patent family annex) (January 2015)

**EP 4 317 347 A1**

## REFERENCES CITED IN THE DESCRIPTION

**Patent documents cited in the description**

- JP 2018177902 A
- JP 2019214739 A
- JP 2019151837 A
- JP 2020158590 A
- JP 6307175 B